# EUROPÄISCHE PATENTSCHRIFT

(11) **EP 3 201 991 B1**
(45) Veröffentlichungstag und Bekanntmachung des Hinweises auf die Patenterteilung: **07.11.2018**
(21) Anmeldenummer: 15775101.7
(22) Anmeldetag: 10.09.2015
(51) Int. Cl.: H01R 9/05, H02G 3/06, H01R 9/03, H01R 13/6592

(54) **VORRICHTUNG ZUM ELEKTROMAGNETISCH VERTRÄGLICHEN VERBINDEN VON ELEKTRISCHEN LEITERN MIT ABSCHIRMUNGSSCHICHT**
DEVICE FOR CONNECTING ELECTRICAL CONDUCTORS HAVING A SHIELDING LAYER IN AN ELECTROMAGNETICALLY COMPATIBLE MANNER
PROCÉDÉ DE RACCORDEMENT COMPATIBLE DU POINT DE VUE ÉLECTROMAGNÉTIQUE DE CONDUCTEURS ÉLECTRIQUES DOTÉS D'UNE COUCHE DE BLINDAGE

(30) Priorität: 02.10.2014 DE 102014220016
(43) Veröffentlichungstag der Anmeldung: 09.08.2017
(73) Patentinhaber: Sumitomo Electric Bordnetze GmbH, 38444 Wolfsburg (DE)
(72) Erfinder: ADAM, Ole, 38106 Braunschweig (DE)
(74) Vertreter: Gulde & Partner
(86) Internationale Anmeldenummer: PCT/EP2015/070704
(87) Internationale Veröffentlichungsnummer: WO 2016/050473

(56) Entgegenhaltungen:
- WO-A1-2006/008022
- DE-A1- 10 016 943
- DE-A1-102014 202 229
- DE-U1- 29 607 803
- GB-A- 2 353 644
- US-A1- 2002 094 724

## Beschreibung

Gegenstand der vorliegenden Erfindung ist eine Vorrichtung zum elektromagnetisch verträglichen Verbinden von elektrischen Leitern mit Abschirmungsschicht gegen Störfelder, welche die im Oberbegriff des Anspruchs 1 genannten Merkmale aufweist.

Elektrische Verbinder, bei denen die elektromagnetische Verträglichkeit eine Anforderung darstellt, kommen zum Beispiel in Kraftfahrzeugen, in der Nachrichtentechnik, in Flugzeugen oder anderen technischen Bereichen zum Einsatz. In Automobilen werden Versorgungsspannungen auf unterschiedlichen Spannungsniveaus bereitgestellt und in verschiedene Bereiche des Fahrzeugs verteilt. Zu diesem Zweck werden die elektrischen Leiter in Kabelbäumen zusammengeführt, verlegt und wieder aufgetrennt. Die Zusammenführung und Trennung der einzelnen Kabel erfolgt über Verteilerstücke. Im Bereich höherer Spannungsniveaus, im Automobil zum Beispiel ab 60 Volt, werden diese auch als Hochvoltverteiler bezeichnet. Diese unterliegen besonderen Sicherheitsanforderungen. In komplexen mechatronischen Systemen wie modernen Automobilen werden zudem hohe Anforderungen an die elektromagnetische Verträglichkeit der verbauten Komponenten gestellt. Die Nutzung elektrischer Energie geht mit der Bildung elektrischer, magnetischer oder elektromagnetischer Felder einher. Diese Felder können andere elektrische und elektronische Komponenten beziehungsweise deren Funktion beeinträchtigen. Der Begriff der elektromagnetischen Verträglichkeit bezieht sich auf die Vermeidung solcher gegenseitiger und meist negativer Beeinflussung von elektrischen und elektronischen Komponenten durch erzeugte Störfelder. Kabel zur Spannungsversorgung sind daher gegen Störfelder abgeschirmt. Sie bestehen zum Beispiel aus zwei elektrisch leitfähigen Adern, die jeweils von einer elektrischen Isolationsschicht aus Kunststoff umhüllt sind. Anschließend folgt zum Beispiel eine weitere gemeinsame Kunststoffschicht, welche beide für sich bereits isolierten Kabelstränge umhüllt. Diese Schicht wiederum ist von einer Abschirmungsschicht umgeben, die zum Beispiel die Form einer leitfähigen metallischen Folie oder eines Geflechts haben kann und eine Abschirmung gegen die zuvor beschriebenen Störfelder darstellt. Zum Schutz der Abschirmungsschicht ist diese in der Regel von einer weiteren Kunststoffschicht umgeben, die die Außenhülle des Kabels bildet.

Um solche Kabel zur Verteilung der Spannung, zum Beispiel in einem Automobil, mit einer Spannungsquelle oder -senke zu verbinden, muss es im Bereich der Schnittstellen abisoliert werden, das heißt, es muss von Abschirmungs- und Schutzschichten befreit werden, damit die leitfähigen Adern zugänglich werden. In der Konsequenz ist die Abschirmungsschicht unterbrochen, so dass Maßnahmen zur Sicherstellung der elektromagnetischen Verträglichkeit erforderlich sind.

In der DE 10 2005 033 910 A1 wird ein Schirmstecker beschrieben, bei dem mehrere Leitungen in ein gemeinsames Steckergehäuse münden. Die Abschirmungen der einzelnen Leitungen sind zwischen je einer Manschette und einer Hülse fixiert, die über einen Plattenteil an das Steckergehäuse geschraubt sind.

In der DE 600 03 279 T2 wird ein abgeschirmter Verbinder (Schutzverbinder) beschrieben, bei dem eine elektrisch leitfähige Hülse mit der freigelegten Abschirmungsschicht eines Leiters verbunden ist. Die Hülse wiederum ist mit einem elektrisch leitfähigen Flansch kontaktiert, der an einer Schutzwand befestigt ist. Zusätzlich verfügt der Schutzverbinder über ein Gehäuse, welches die zu schützende Leitung (Schutzleitung) und den Flansch zueinander fixiert.

In der EP 0 896 751 A1 wird eine Vorrichtung zur elektrischen Kontaktierung eines Kabelschirms mit einem Steckergehäuse beschrieben. Die Vorrichtung verfügt über eine Haltescheibe und eine Klemmhülse. Die Klemmhülse kann derart in die Haltescheibe eingesetzt werden, dass ein dazwischenliegender Kabelschirm eingeklemmt und elektrisch kontaktiert wird.

US 2002/0094724 A1 offenbart eine mehrteilige Vorrichtung zum Verbinden einer Abschirmungsschicht eines elektrischen Leiters mit einem Gehäuse. Die Abschirmungsschicht wird über einen Verbindungsabschnitt eines Abschirmelementes mittels eines Ringes kontaktiert. Das Abschirmelement wird seinerseits über eine Schraube mit einem Gehäuse verbunden. Hierdurch ergibt sich ein mehrteiliger komplizierter Aufbau mit einem relativ hohen elektrischen Kontaktwiderstand.

Weitere mehrteilige Vorrichtungen zum Verbinden einer Abschirmungsschicht mit einem Gehäuse sind aus DE 10 2014 202 229 A1, WO 2006/008022 A1, GB 2 353 644 A sowie DE 100 16 943 A1 bekannt.

Die Betrachtungen zum Stand der Technik zeigen deutlich, dass bislang bekannte Lösungen auf eine große Anzahl an Einzelteilen wie Hülsen und Scheiben oder zusätzliche Gehäuse zurückgreifen. Dadurch steigen Komplexität und Kosten. Der Bauraumbedarf sowie der Aufwand bei der Montage werden negativ beeinflusst. Zudem erhöht sich die Anzahl möglicher Ersatzteile.

Der vorliegenden Erfindung liegt die Aufgabe zugrunde, einen Hochvoltverteiler beziehungsweise eine Vorrichtung zu schaffen, mit der mehrere geschirmte elektrische Leiter verbunden werden können, ohne dass die elektromagnetische Verträglichkeit dadurch negativ beeinflusst wird. Die Vorrichtung soll sich dabei durch einen einfachen Aufbau auszeichnen.

Diese Aufgabe wird durch eine Vorrichtung mit den in Anspruch 1 genannten Merkmalen gelöst. Die Vorrichtung besteht aus einem Gehäuse, das zumindest abschnittsweise elektrisch leitfähig ist. Es ist dazu geeignet, zu verbindende geschirmte Leiter zumindest abschnittsweise zu führen. Im Bereich einer freigelegten Abschirmungsschicht der zu verbindenden Leiter kann ein elektrisch leitfähiger Teil des Gehäuses mit der Abschirmungsschicht der Leiter kontaktiert werden. Erfindungsgemäß ist das Gehäuse in diesem Bereich so ausgeprägt, dass die Abschirmungsschicht der Leiter nach hinten umgestülpt und über einen Kontaktabschnitt des Gehäuses zurückgezogen werden kann. Erfindungsgemäß wird der über den Kontaktabschnitt gestülpte Teil der Abschirmungsschicht des jeweiligen Leiters dort mit einer einzigen einteiligen Klemme befestigt, wobei die Verbindung kraftschlüssig, formschlüssig oder eine Mischung aus beiden Verbindungsarten sein kann.

Der Vorteil dieser Lösung ist, dass neben dem Gehäuse des Hochvoltverteilers maximal eine zusätzliche Komponente pro zu verbindendem Leiter verbaut ist.

Weitere bevorzugte Ausgestaltungen der Erfindung ergeben sich aus den in den Unteransprüchen genannten Merkmalen.

So können die Kontaktabschnitte zur Kontaktierung der Leiter konzentrisch um den jeweiligen Leiter herum ausgebildet sein.

Die Klemmverbindung weist bevorzugt einen geringen elektrischen Kontaktwiderstand auf. Dies wirkt sich positiv auf das Alterungsverhalten und die Widerstandsfähigkeit gegen Umwelteinflüsse aus. In einer bevorzugten Ausgestaltung der vorliegenden Erfindung lassen sich mehr als zwei Leiter miteinander verbinden. Das Gehäuse der Vorrichtung ist bevorzugt mehrteilig ausgeführt und kann insbesondere aus einem Gehäusegrundteil und einem Gehäusedeckel bestehen, wobei mindestens zwei Gehäuseteile elektrisch leitfähig miteinander verbunden sind. Das Gehäuse ist bevorzugt gegenüber der Umwelt abgedichtet. Vorteilhafterweise kann das Gehäuse mit einer isolierenden Schicht versehen sein, zum Beispiel aus Kunststoff oder Lack, die das Gehäuse als geschlossene Schicht umgibt. Eine Erdung des Gehäuses ist dann nicht mehr erforderlich.

In einer weiteren bevorzugten Ausgestaltung der Erfindung verfügt die Vorrichtung über eine Arretierung, über die die zu verbindenden Leiter an dem Gehäuse positioniert werden können.

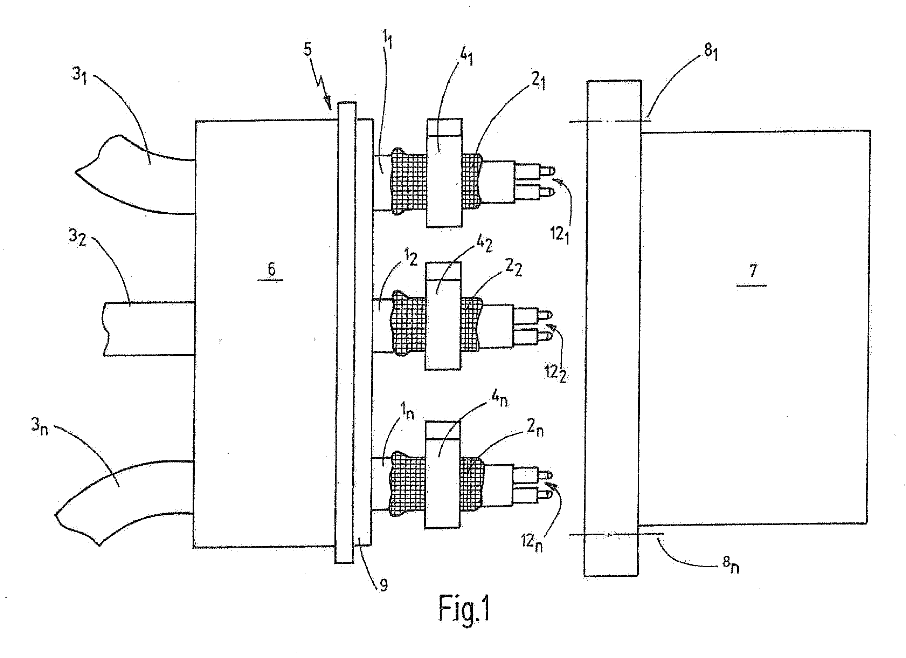

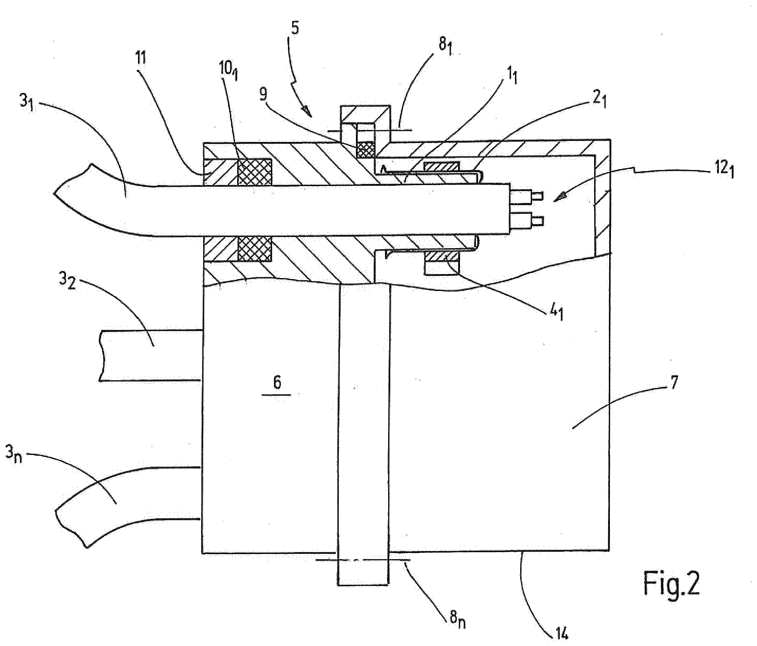

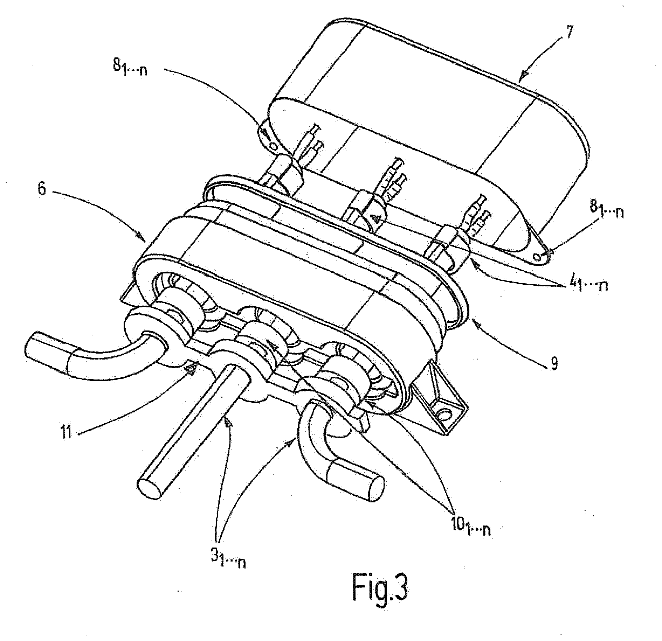

Nachfolgend wird eine bevorzugte Ausgestaltung der vorliegenden Erfindung unter Bezugnahme auf die Figuren 1 bis 3 beschrieben. Die Nummerierung der Komponenten gilt für alle Figuren gleichermaßen und ist an nachfolgender Stelle erläutert. Es zeigen:
- Figur 1: eine erfindungsgemäße Vorrichtung mit geöffnetem Gehäusedeckel;
- Figur 2: die Vorrichtung mit geschlossenem Gehäusedeckel und einem zeichnerischen Ausbruch; und
- Figur 3: eine schematische Perspektivansicht eines Hochvoltverteilers.

Kontaktabschnitte 1₁, 1₂, 1ₙ eines Gehäuses 5, die mit Abschirmungsschichten 2₁, 2₂, 2ₙ zu verbindender Leiter 3₁, 3₂, 3ₙ elektrisch leitfähig kontaktiert werden, sind konzentrisch in Form von Hohlzylindern um den jeweiligen Leiter 3₁, 3₂, 3ₙ herum ausgebildet. Zur Fixierung der Abschirmungsschichten 2₁, 2₂, 2ₙ werden Klemmen 4₁, 4₂, 4ₙ verwendet, die einteilig ausgeführt sind und eine kraftschlüssige Verbindung zwischen den Abschirmungsschichten 2₁, 2₂, 2ₙ und den Kontaktabschnitten 1₁, 1₂, 1ₙ bewirken. Das Gehäuse 5 ist derart ausgebildet, dass eine Vielzahl von Leitern 3₁, 3₂, 3ₙ darin geführt und mit dem Gehäuse 5 in der beschriebenen Art und Weise kontaktiert werden kann. Die Leiter 3₁, 3₂, 3ₙ sind in dem Gehäuse 5 in einer Reihe angeordnet, so dass sich die Konstruktion entsprechend der Anzahl zu verbindender Leiter 3₁, 3₂, 3ₙ einfach skalieren lässt. Bevorzugt ist das Gehäuse 5 mehrteilig ausgeführt und besteht in der vorliegenden Ausgestaltung aus einem Gehäusegrundteil 6 und einem Gehäusedeckel 7. Der Gehäusedeckel 7 ist an dem Gehäusegrundteil 6 mit Schrauben 8₁, 8ₙ befestigt. Die Schnittstelle zwischen beiden Gehäuseteilen 6, 7 sowie die Schnittstellen im Bereich des Eintritts der Leiter 3₁, 3₂, 3ₙ in das Gehäusegrundteil 6 sind gegenüber der Umwelt mit einer Gehäusedichtung 9 und mit Kabeldichtungen 10₁, 10₂, 10ₙ versehen. Beide Gehäuseteile 6, 7 sind elektrisch leitfähig miteinander verbunden. Das Gehäuse 5 ist weiterhin mit einer geschlossenen isolierenden Schicht 14 versehen. Vor Eintritt der Leiter 3₁, 3₂, 3ₙ in das Gehäuse werden diese durch eine Arretierung 11 positioniert. Zur elektrischen Verbindung freigelegte Adern 12₁, 12₂, 12ₙ der Leiter 3₁, 3₂, 3ₙ sind in nicht verbundenem Zustand dargestellt.

Die beschriebene erfindungsgemäße Vorrichtung wird bevorzugt in Kraftfahrzeugen, insbesondere in Personenkraftwagen eingesetzt. Sie dient der Verteilung von Spannungen, insbesondere von mehr als 60 Volt, in dem Fahrzeug und dem Verbinden von abgeschirmten elektrischen Leitern, wobei die elektromagnetische Verträglichkeit nicht beeinträchtigt wird.

### BEZUGSZEICHENLISTE

- 1₁, 1₂, 1ₙ: Kontaktabschnitte 1 bis n
- 2₁, 2₂, 2ₙ: Abschirmungsschichten 1 bis n..
- 3₁, 3₂, 3ₙ: Leiter 1 bis n
- 4₁, 4₂, 4ₙ: Klemmen 1 bis n
- 5: Gehäuse
- 6: Gehäusegrundteil
- 7: Gehäusedeckel
- 8₁, 8ₙ: Schrauben 1 bis n
- 9: Gehäusedichtung
- 10₁, 10₂, 10ₙ: Kabeldichtungen 1 bis n
- 11: Arretierung
- 12₁, 12₂, 12ₙ: Adern 1 bis n
- 13: Ausbruch
- 14: isolierende Beschichtung

## Patentansprüche

1. Vorrichtung zur Schaffung einer elektromagnetisch verträglichen und elektrisch leitfähigen Verbindung zwischen elektrischen Leitern (3₁, 3₂, 3ₙ) mit Abschirmungsschicht (2₁, 2₂, 2ₙ) gegen Störfelder, zu deren Führung ein zumindest abschnittsweise elektrisch leitfähiges Gehäuse (5) vorgesehen ist, das mit den Abschirmungsschichten (2₁, 2₂, 2ₙ) der Leiter (3₁, 3₂, 3ₙ) kontaktiert ist,
**dadurch gekennzeichnet, dass**
die Abschirmungsschicht (2₁, 2₂, 2ₙ) mindestens eines Leiters (3₁, 3₂, 3ₙ) durch Umstülpen und Zurückziehen über einen Kontaktabschnitt (1₁, 1₂, 1ₙ) des Gehäuses (5) gezogen ist und an dem Kontaktabschnitt (1₁, 1₂, 1ₙ) mit einer einzigen einteiligen Klemme (4₁, 4₂, 4ₙ) befestigt ist.

2. Vorrichtung nach Anspruch 1,
**dadurch gekennzeichnet, dass**
die Kontaktabschnitte (1₁, 1₂, 1ₙ) konzentrisch um die zu verbindenden Leiter (3₁, 3₂, 3ₙ) ausgebildet sind.

3. Vorrichtung nach einem der Ansprüche 1 oder 2,
**dadurch gekennzeichnet, dass**
mehr als zwei Leiter (3₁, 3₂, 3ₙ) verbunden sind.

4. Vorrichtung nach einem der Ansprüche 1 bis 3,
**dadurch gekennzeichnet, dass**
das Gehäuse (5) mehrteilig ausgeführt ist und zumindest ein Gehäusegrundteil (6) und einen Gehäusedeckel (7) umfasst.

5. Vorrichtung nach Anspruch 4,
**dadurch gekennzeichnet, dass**
die Gehäuseteile (6, 7) elektrisch leitfähig miteinander verbunden sind.

6. Vorrichtung nach einem der Ansprüche 1 bis 5,
**dadurch gekennzeichnet, dass**
das Gehäuse (5) gegenüber der Umwelt abgedichtet ist.

7. Vorrichtung nach einem der Ansprüche 1 bis 6,
**dadurch gekennzeichnet, dass**
die Leiter (3₁, 3₂, 3ₙ) an dem Gehäuse (5) über eine Arretierung (11) positioniert sind.

8. Vorrichtung nach einem der Ansprüche 1 bis 7,
**dadurch gekennzeichnet, dass** das Gehäuse (5) gegenüber der Umwelt elektrisch isoliert ist.

## Claims

1. Device for creating an electromagnetically compatible and electrically conductive connection between electrical conductors (3₁, 3₂, 3ₙ) with shielding layer (2₁, 2₂, 2ₙ) against interference field, for whose routing an electrically conductive enclosure (5) is provided at least in sections, which is in contact with the shielding layers (2₁, 2₂, 2n) of the conductors (3₁, 3₂, 3ₙ),
**characterised in that**
the shielding layer (2₁, 2₂, 2ₙ) of at least one conductor (3₁, 3₂, 3ₙ) is pulled over one contact section (1₁, 1₂, 1ₙ) of the housing (5) by means of turning inside out and pulling back and is fastened onto the contact section (1₁, 1₂, 1ₙ) by a single one-piece terminal (4₁, 4₂, 4ₙ).

2. Device according to claim 1,
**characterised in that**
the contact sections (1₁, 1₂, 1ₙ) are formed concentrically around the conductors (3₁, 3₂, 3ₙ) to be connected.

3. Device according to one of the claims 1 or 2,
**characterised in that**
more than two conductors (3₁, 3₂, 3ₙ) are connected.

4. Device according to one of the claims 1 to 3,
**characterised in that**
the housing (5) is made of multiple parts and includes at least one base housing part (6) and one housing cover (7).

5. Device according to claim 4,
**characterised in that**
the housing parts (6, 7) are connected to each other in an electrically conductive manner.

6. Device according to one of the claims 1 to 5,
**characterised in that**
the housing (5) is sealed off from the environment.

7. Device according to one of the claims 1 to 6,
**characterised in that**
the conductors (3₁, 3₂, 3ₙ) are positioned on the housing (5) via a locking device (11).

8. Device according to one of the claims 1 to 7,
**characterised in that**
the housing (5) is electrically insulated from the environment.

## Revendications

1. Dispositif pour l'établissement d'un raccordement électromagnétiquement compatible et électriquement conducteur entre des conducteurs électriques ((3₁, 3₂, 3ₙ) dotés d'une couche de blindage (2₁, 2₂, 2ₙ) contre les champs parasites, pour le guidage duquel est prévu un boîtier (5) au moins partiellement électriquement conducteur, lequel est en contact avec les couches de blindage (2₁, 2₂, 2ₙ) des conducteurs,
**caractérisé en ce que**
la couche de blindage (2₁, 2₂, 2ₙ) d'au moins un des conducteurs (3₁, 3₂, 3ₙ) est retournée, puis tirée vers l'arrière de manière à s'étirer sur une partie de contact (1₁, 1₂, 1ₙ) du boîtier (5) et est fixée à la partie de contact (1₁, 1₂, 1ₙ) au moyen d'une pince (4₁, 4₂, 4ₙ) unique et composée d'une seule pièce.

2. Dispositif selon la revendication 1,
**caractérisé en ce que**
les parties de contact (1₁, 1₂, 1ₙ) sont formées concentriquement autour des conducteurs (3₁, 3₂, 3ₙ) à raccorder.

3. Dispositif selon l'une des revendications 1 et 2,
**caractérisé en ce que**
plus de deux conducteurs (3₁, 3₂, 3ₙ) sont raccordés.

4. Dispositif selon l'une des revendications 1 à 3,
**caractérisé en ce que**
le boîtier (5) est constitué de plusieurs parties et comprend au moins une pièce de base (6) ainsi qu'un couvercle (7).

5. Dispositif selon la revendication 4,
**caractérisé en ce que**
les parties du boîtier (6, 7) sont raccordées l'une à l'autre de manière à être électriquement conductrices.

6. Dispositif selon l'une des revendications 1 à 5,
**caractérisé en ce que**
le boîtier (5) est rendu étanche à son environnement.

7. Dispositif selon l'une des revendications 1 à 6,
**caractérisé en ce que**
les conducteurs (3₁, 3₂, 3ₙ) sont positionnés au niveau du boîtier par l'intermédiaire d'un dispositif d'arrêt (11).

8. Dispositif selon l'une des revendications 1 à 7,
**caractérisé en ce que**
le boîtier (5) est isolé électriquement de son environnement.
